**Europäisches Patentamt**

(19) **European Patent Office**

**Office européen des brevets**

(11) Publication number: **0 049 540**
**B1**

(12) **EUROPEAN PATENT SPECIFICATION**

(45) Date of publication of patent specification: **11.03.87**

(21) Application number: **81200962.9**

(22) Date of filing: **28.08.81**

(51) Int. Cl.⁴: **G 01 M 3/04, G 01 M 3/26**

(54) **Apparatus for leakage detection of cryogenic materials.**

(30) Priority: **18.09.80 GB 8030160**

(43) Date of publication of application:
**14.04.82 Bulletin 82/15**

(45) Publication of the grant of the patent:
**11.03.87 Bulletin 87/11**

(84) Designated Contracting States:
**DE FR IT NL SE**

(56) References cited:
**DE-A-2 359 268**
**FR-A-1 161 819**
**GB-A-1 336 366**
**GB-A-2 021 265**
**US-A-4 041 771**

(73) Proprietor: **SHELL INTERNATIONALE**
**RESEARCH MAATSCHAPPIJ B.V.**
**Carel van Bylandtlaan 30**
**NL-2596 HR Den Haag (NL)**

(72) Inventor: **Shone, Edward Brian**
**Bellavista Gresford Road**
**Hope Clwyd North Wales (GB)**
Inventor: **Wilson, Robert William**
**22 Demage Lane**
**Upton-by-Chester Cheshire (GB)**
Inventor: **Cunningham, Gordon Lindsay**
**"Coonawarra" 6 Hurst Way**
**Pyrford Woking Surrey (GB)**

(74) Representative: **Aalbers, Onno et al**
**P.O. Box 302**
**NL-2501 CH The Hague (NL)**

Courier Press, Leamington Spa, England.

# Description

The invention relates to an apparatus for leakage detection of cryogenic materials from a cold-insulated structure, which is adapted to contain or to transport said cryogenic materials.

Such an apparatus is known from GB—A—1,336,366. This GB—A—1,336,366 discloses the "martensitic transformation" effect at very low temperatures and to use it to actuate some undefined thermal safety apparatus.

However, in this device the memory metal is heated through its transition temperature and is less suitable to be used in cryogenic leakage detection.

Presently many cryogenic materials are known and are widely used. For example, the role of liquid gases such as liquefied natural gas (LNG) and liquefied petroleum gas (LPG) becomes very important. Other examples of important cryogenic materials are liquefied oxygen, ethylene, butane, etc. Suitable structures have been developed, which are adapted to contain and to transport cryogenic materials. LNG tankers may be mentioned by way of example.

It will be clear that certain measures such as insulation should be taken to maintain the cryogenic materials at the desired temperature. Several insulation systems have already been developed.

It can be understood that if a fault such as a crack developed in the insulation system of the structure containing the cryogenic material, the cold from the said material would leak through the fault. So, the area in contact with the fault would become chilled. This could lead to catastrophic failure of the structure as a whole and to dangerous spillage.

To avoid these dangers it is very desirable to be informed about leakage as soon as a leak would occur.

Normal methods employed to detect such cold spots, which are present if a leak would occur, involve either the visual inspection of the cryogenic material-containing structure for ice formation or the attachment of temperature measuring means, such as thermocouples to the surface of the said structure and the determination of temperature changes detected. The former method is time-consuming and can be both difficult and unpleasant, whilst the latter is expensive to install and maintain. The demerits of the above methods are increased greatly, when extended to structures such as tanks as employed in the large bulk liquid gas marine tankers of the present day and will be even further increased when projected designs for still larger vessels are brought to completion.

So there exists a large need for a device which should be easily applied or removed from the structure containing the said cryogenic materials and which should be able to work in areas of maximum safety requirements. Further, no electrical connections should be used to avoid danger of ignition.

It is therefore an object of the invention to provide a simple, generally fool-proof and safe device to obtain information about cryogenc leaks. Such a device may for example be used to detect leakage in pipes (in particular under couplings), valves, tank couplings, etc.

The device according to the invention therefore is characterized by comprising a heat-conductive element (2'), which can be brought into contact with the cryogenic material-containing or transporting structure (5'), and comprising a "shape memory effect" (SME) element (3') which, in case of leakage, is cooled down through its transition temperature, thus giving a displacement according to the cryogenic temperature to which the said SME element (3') is subject in case of leakage, said device further comprising a housing (1'), wherein a pressure medium is present, and which is provided with an opening (1'a), which opening (1'a) can be closed by said heat-conductive element (2'), said heat-conductive element (2') being acted on by the said SME element (3') in case of leakage in such a way that the said opening (1'a) is no longer closed, and a means for deriving from the movement of the said heat conductive element (2') a pressure signal for activating an alarm (6').

The reference numerals are not to be considered as providing any limitation of the scope of the claims, but are to be construed merely as an aid to an easier understanding of the defined subject matter.

The device may further comprise an alarm device or indicator.

By a "shape memory effect" (SME) element is meant an element of a material, having an elastic modulus which varies significantly with temperature in a reversible manner over a transition temperature range dependent on the material employed. Usually alloys are used. Such SME alloys are known as such to those skilled in the art and will not be described here in detail.

The invention is based upon the fact that memory alloys having the shape memory effect change their shape quickly and massively if subject to a change in temperature. The said change in shape will occur if leakage of cryogenic material exists and the said change will activate a suitable alarm or indicator, so that it will be clear that the cryogenic material is leaking.

It can be remarked, that GB—A—2,021,265 discloses a temperature-responsive actuating element using SME elements operating at or above room-temperature. However, the specific solution of cryogenic leakage problems according to the invention can not be derived therefrom.

The invention will now be described by way of example in more detail in the accompanying drawing, in which:

Figure 1 shows by way of background information schematically an example of a device for leakage detection of cryogenic materials;

Figure 2 represents schematically an example of an embodiment of the device according to the invention.

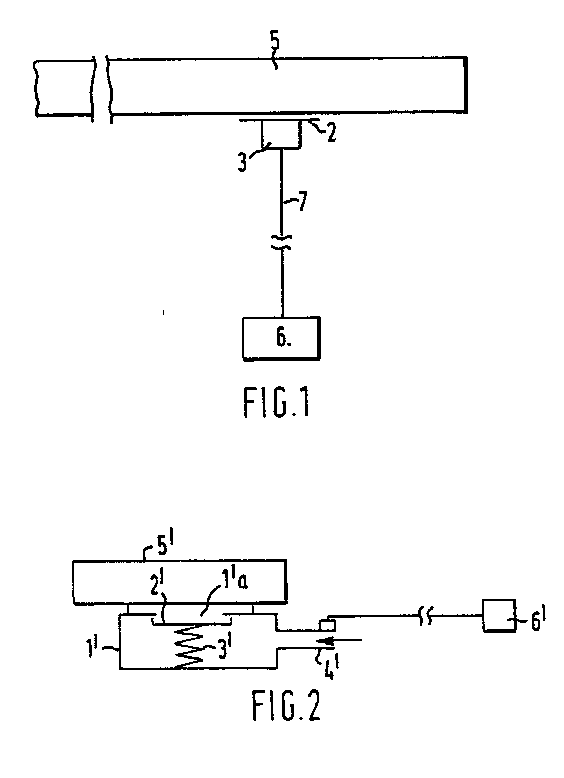

Referring now to Figure 1 a heat-conductive element 2 is brought into contact with a structure 5 containing cryogenic material. In this example the structure 5 is a pipeline. The said element 2 is connected through any means suitable for the purpose to a SME element 3. Said SME element 3 is connected to a remote alarm 6 through any suitable means, for example a cable 7, which activates the alarm mechanically.

If a leakage in the said structure 5 occurs, cryogenic material will fall onto the heat-conducting element 2. So, cold will pass to the SME element 3 which will change its shape quickly and massively. This change in shape will act on the remote alarm 6 through the mechanical flexible means 7, such as a Bowden cable.

In Figure 2 a housing 1' is provided with an opening 1'a which is directed towards the structure 5' containing cryogenic material. In this example the structure 5' is a tank. The opening 1'a can be closed by a heat-conductive element 2', by means of a biasing element 3', made from a SME alloy. The housing 1' may be pressurized through an opening 4' by any suitable fluid medium, for example air or inert gas. The opening 1'a of the housing 1' is brought into contact through any means suitable for the purpose with the cryogenic material-containing structure.

If a leakage in the said structure 5' occurs, cryogenic material will fall onto the heat-conducting element 2'. So, cold will pass to the SME element 3'. Said element 3' will change its shape quickly and massively, and in this way the element 2' will no longer close the opening 1'a. Subsequently, the pressure medium will escape round the element 2' and thus a suitable pressure signal can be obtained to activate an alarm 6'. Any alarm suitable for the purpose may be used, for example a sound alarm or an indicating element.

It will be appreciated that the housing 1' and opening 1'a may have any suitable shape. The opening 1'a may, for example, have a round shape, so that the element 2' may be a disc. Further, an advantageous shape of the SME element is a bias element such as a spring and in particular a coiled spring. An advantageous material used for the heat-conductive element may, for example, be copper. Another suitable material is SME material.

It will be appreciated that any signal suitable for the purpose may be used to activate the alarm. For example, the pressure signal may be converted into an electric signal to activate an electronic alarm. Further any pressure medium suitable for the purpose may be used. If a device according to the invention is used on board tankers, the air to be used for the said alarm may be supplied from the ship's own air system.

Further, it will be appreciated that it is not absolutely necessary to provide a remote alarm device or indicator. In advantageous embodiments of the invention (not shown) the alarm device or indicator may be provided at the detecting device itself.

## Claims

1. A device for detecting leakage of cryogenic materials from a cold-insulated structure, which is adapted to contain or to transport said cryogenic materials, characterized by comprising a heat-conductive element, which can be brought into contact with the cryogenic material-containing or transporting structure, and comprising a "shape memory effect" (SME) element which, in case of leakage, is cooled down through its transition temperature, thus giving a displacement according to the cryogenic temperature to which the said SME element is subject in case of leakage, said device further comprising a housing, wherein a pressure medium is present, and which is provided with an opening, which opening can be closed by said heat-conductive element, said heat-conductive element being acted on by the said SME element in case of leakage in such a way that the said opening is no longer closed, and a means for deriving from this displacement of the said heat conductive element a pressure signal for activating an alarm.

2. The device as claimed in claim 1, characterized by further comprising an alarm device or indicator.

3. The device as claimed in claim 1 or 2, characterized in that the heat-conductive element is acted on by a SME bias element.

4. The device as claimed in claim 3, characterized in that the said SME bias element is a spring.

5. The device as claimed in any one of claims 1—4, characterized in that the heat-conductive element is made of SME material.

6. The device as claimed in any one of claims 1—5, characterized in that the heat-conductive element is a disc.

7. The device as claimed in any one of claims 1—4, characterized in that the heat-conductive element is a copper disc.

8. The device as claimed in claim 4, characterized in that the SME element is a coiled spring.

## Patentansprüche

1. Vorrichtung zum Nachweis des Auslaufens von kryogenen Materialien aus einer kalt isolierten Struktur, die geeignet ist, die kryogenen Materialien zu enthalten oder zu transportieren, dadurch gekennzeichnet, daß sie ein wärmeleitfähiges Element umfaßt, das mit der das kryogene Material enthaltenden oder transportierenden Struktur in Kontakt steht, und ein Element mit einem "Formgedächtnis" (SME) umfaßt, das im Falle des Auslaufens unter seine Übergangstemperatur gekühlt wird und damit eine Lageänderung entsprechend der kryogenen Temperatur, der das SME-Element im Falle des Auslaufens ausgesetzt ist, erfährt, wobei die Vorrichtung ferner ein Gehäuse umfaßt, in dem ein Druckmedium vorhanden ist und das mit einer Öffnung versehen ist, die durch das wärmeleitfähige Element verschlossen sein kann, das im Falle des Auslaufens von dem SME-Element beaufschlagt wird, daß die Öffnung nicht mehr verschlossen ist, und daß ein Mittel zur Ableitung eines Drucksignals zur Erzeugung eines Alarms durch Verdrängung des wärmeleitfähigen Elements vorgesehen ist.

2. Vorrichtung nach Anspruch 1, dadurch gekennzeichnet, daß sie ferner eine Alarmvorrichtung oder einen Indikator umfaßt.

3. Vorrichtung nach Anspruch 1 oder 2, dadurch gekennzeichnet, daß das wärmeleitfähige Element von einem vorgespannten SME-Element beaufschlagt wird.

4. Vorrichtung nach Anspruch 3, dadurch gekennzeichnet, daß das SME-Element eine Feder ist.

5. Vorrichtung nach einem der Ansprüche 1 bis 4, dadurch gekennzeichnet, daß das wärmeleitfähige Element aus SME-Material besteht.

6. Vorrichtung nach einem der Ansprüche 1 bis 5, dadurch gekennzeichnet, daß das wärmeleitfähige Element eine Scheibe ist.

7. Vorrichtung nach einem der Ansprüche 1 bis 4, dadurch gekennzeichnet, daß das wärmeleitfähige Element eine Kupferscheibe ist.

8. Vorrichtung nach Anspruch 4, dadurch gekennzeichnet, daß das SME-Element eine Spiralfeder ist.

**Revendications**

1. Un appareil pour détecter une fuite de matériaux cryogéniques à partir d'une structure isolée pour le froid, qui est adaptée pour contenir ou transporter lesdits matériaux cryogéniques, caractérisé en ce qu'il comprend un élément conducteur de la chaleur, qui peut être amené en contact avec la structure contenant ou transportant un matériau cryogénique, et comprenant un élément à "effet de mémoire de forme" (SME) qui, en cas de fuite, est refroidi en passant par sa température de transition, ce qui produit un déplacement correspondant à la température cryogénique à laquelle ledit élément (SME) est soumis en cas de fuite, ledit appareil comprenant en outre un carter où se trouve un milieu sous pression et qui est pourvu d'une ouverture, ladite ouverture pouvant être fermée par ledit élément thermiquement conducteur, ledit élément thermiquement conducteur étant actionné par ledit élément (SME) en cas de fuite, de telle sorte que ladite ouverture ne soit plus fermée, et un moyen pour produire en fonction du mouvement dudit élément thermiquement conducteur un signal de pression pour actionner une alarme.

2. L'appareil tel que revendiqué dans la revendication 1, caractérisé en outre en ce qu'il comprend un dispositif d'alarme ou un indicateur.

3. L'appareil tel que revendiqué dans la revendication 1 ou 2, caractérisé en ce que l'élément thermiquement conducteur est actionné par un élément de sollicitation SME.

4. L'appareil tel que revendiqué dans la revendication 3, caractérisé en ce que ledit élément de sollicitation SME est un ressort.

5. L'appareil tel que revendiqué dans l'une quelconque des revendications 1 à 4, caractérisé en ce que l'élément thermiquement conducteur est formé d'un matériau SME.

6. L'appareil tel que revendiqué dans l'une quelconque des revendications 1 à 5, caractérisé en ce que l'élément thermiquement conducteur est un disque.

7. L'appareil tel que revendiqué dans l'une quelconque des revendications 1 à 4, caractérisé en ce que l'élément thermiquement conducteur est un disque en cuivre.

8. L'appareil tel que revendiqué dans la revendication 4, caractérisé en ce que l'élément SME est un ressort hélicoïdal.

FIG.1

FIG.2